Europäisches Patentamt

European Patent Office

Office européen des brevets

(11) Veröffentlichungsnummer : **0 109 066**
**B1**

(12) EUROPÄISCHE PATENTSCHRIFT

(45) Veröffentlichungstag der Patentschrift :
01.10.86

(21) Anmeldenummer : 83111280.0

(22) Anmeldetag : 11.11.83

(51) Int. Cl.⁴ : **E 06 B    9/204, E 06 B    9/209**

(54) Antrieb eines Rolladens.

(30) Priorität : 12.11.82 DE 3242007

(43) Veröffentlichungstag der Anmeldung :
23.05.84 Patentblatt 84/21

(45) Bekanntmachung des Hinweises auf die Patenterteilung : 01.10.86 Patentblatt 86/40

(84) Benannte Vertragsstaaten :
AT BE CH DE FR GB IT LI LU NL SE

(56) Entgegenhaltungen :
DE-A- 2 602 273
FR-A- 2 248 742
GB-A- 2 041 840

(73) Patentinhaber : H. Hench GmbH
Aschaffstrasse 75
D-8750 Aschaffenburg (DE)

(72) Erfinder : Hench, Hans
Kinzigstrasse 27
D-8750 Anschaffenburg (DE)
Erfinder : Pfarrer, Robert
Spangenbergweg 11
D-8750 Anschaffenburg (DE)

(74) Vertreter : Altenburg, Udo, Dipl.-Phys. et al
Patent- und Rechtsanwälte Bardehle-Pagenberg-
Dost-Altenburg & Partner Postfach 86 06 20
D-8000 München 86 (DE)

**Beschreibung**

Die Erfindung bezieht sich auf einen Antrieb eines Rolladens. Bisher bestehen derartige Antriebe entweder aus mittels Seilen oder Gurten betätigten Aufwickel- bzw. Abwickelspulen, die auf einer Drehachse des Rolladens sitzen und eine Feststellbremse aufweisen können (FR-A-2 248 742), oder aus in ein Kegelradgetriebe eingreifenden Antriebsstangen.

Ein bevorzugter Anwendungsfall ist der Antrieb eines Rolladens, wie er für den äußeren Abschluß von Fenstern, Türen und dergleichen verwendet wird, und zwar zur Verhinderung des Lichtdurchtritts oder als Einbruchssicherung. Im letzteren Falle handelt es sich insbesondere um einen Gitterrolladen.

Bei einer aus der DE-A-1 198 239 bekannten Antriebsverbindung dient eine in einem Rohr geleitete Spirale als Antriebsstab eines Fensterhebers eines Kraftfahrzeugs, wozu die Spirale mit einem einen Längsschlitz des Rohres durchgreifenden Mitnehmer verbunden ist, der am Fenster befestigt ist. Durch Verdrehen eines Antriebszahnrades, das in eine Ausnehmungsreihe der Spirale eingreift, wird diese in dem Rohr längsverschoben, wobei sie über den Mitnehmer das Fenster mitnimmt. Es ist weiterhin aus der GB-A-2 041 840 bekannt, mit einem derartigen mit einer Spirale versehenen Antriebsstab das Fenster eines Fahrzeugs zu verschwenken, wozu über einen Kurbeltrieb ein in die Spirale eingreifendes Antriebszahnrad die Spirale längsverschiebt, die in ein in der Nähe der Schwenkstelle des Fensters angeordnetes Ritzel eingreift, das bei der Längsverschiebung der Spirale verdreht wird und damit über einen Hebelmechanismus das Fenster verschwenkt.

Es ist weiterhin in der DE-U-1 891 689 eine Einstellvorrichtung für elektrische Geräte offenbart, bei der ein in einem biegsamen Rohr geführtes Seil an seinen Enden mit einem Zahnstangenprofil versehen ist, in das auf der einen Seite ein mit einem Einstellknopf fest verbundenes Stirnrad und auf seiner anderen Seite ein Zahnsegment eingreift. Aufgrund dieser Anordnung läßt sich mittels des Einstellknopfes ein im Gerät enthaltenes abstimmbares Element verstellen, das mit dem Zahnsegment verbunden ist.

Der Erfindung liegt die Aufgabe zugrunde, den bekannten Antrieb eines Rolladens zu verbessern, insbesondere die Störungsanfälligkeit herabzusetzen, wobei zusätzlich ermöglicht werden soll, den Antrieb nicht in der Nähe des Rolladens, sondern ggfs. auch entfernt von diesem anzubringen und den Rolladen gegen unerwünschtes Hochschieben zu sichern.

Die Lösung des Problems besteht in dem Antrieb eines Rolladens mit einer Drehachse und einem auf dieser festsitzenden Ritzel mit einem Gehäuse, in das ein Rohr mit einem in diesem geleiteten biegsamen Antriebsstab geführt ist, der mit einer Ausnehmungsreihe versehen ist und mittels des Rohres mit einem Antriebszahnrad verbunden ist, das mit einer eine selbständige Verdrehung des Antriebszahnrades verhindernden Feststellbremse versehen ist, wobei die Zähne des Ritzels und des Antriebszahnrades in die Ausnehmungsreihe des Antriebsstabs eingreifen und ein über das Ritzel angetriebener, in einem Rohr geführter Zusatzstab so weit bis in den Bereich der Führung des Rolladens gelegt ist, daß der Zusatzstab mit seinem Ende bei geschlossenem Rolladen in dessen Bahn eindringt.

Wenn sich der Zusatzstab in der Schließlage des Rolladens gerade hinter die obere Kante der obersten Lamelle des Rolladens legen soll, dann gestaltet man den Antrieb zweckmäßig so, daß die Achse des Rolladens in dessen Schließlage einen Totgang gegenüber dem Rolladen aufweist.

Anstelle einer Spirale, die den biegsamen Antriebsstab darstellt, können z. B. mit einer entsprechenden Ausnehmungsreihe versehene, biegsame Kunststoffstäbe oder mit Lochreihen versehene Kunststoffstäbe verwendet werden. Bei der Spirale handelts es sich jedoch um ein in einem kontinuierlichen Fertigungsprozeß herstellbares Bauteil, das sich in der Praxis bewährt hat. Im Falle der Verwendung eines mit einer Lochreihe versehenen Bandes ist durch eine entsprechende Gestaltung des das Band führenden Rohres dafür zu sorgen, daß sich das Band in dem Rohr nicht verdrehen kann.

Nachstehend sei die Erfindung anhand von in den Figuren dargestellten Ausführungsbeispielen beschrieben. Es zeigen :

Figuren 1 und 2 einen Rolladen mit der Antriebsverbindung in einer Frontalansicht und in Seitensicht,

Figur 3 das Rohr mit Spirale,

Figur 4 das Antriebszahnrad mit Feststellbremse,

Figur 5 einen Schnitt gemäß V-V aus Fig. 4,

Figur 6 einen Schnitt durch das vom Antriebszahnrad beabstandete Gehäuse,

Figur 7 die Aufhängung eines Rolladens und dessen Sperrung in der Schließlage,

Figuren 8-10 Ausführungsbeispiele für weitere Arten der Sperrung in der Schließlage.

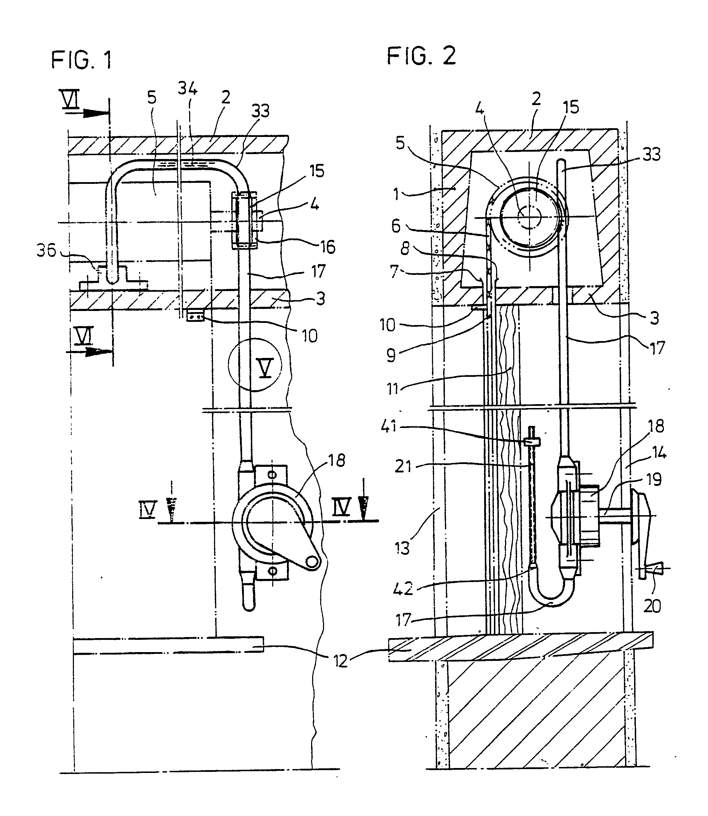

In den Fig. 1 und 2 ist ein mit der erfindungsgemäßen Antriebsverbindung versehener Rolladen dargestellt. Für die Unterbringung des Rolladens dient der Rolladenkasten 1, der gemäß Fig. 1 durch den Deckel 2 und die Unterwand 3 begrenzt ist. In dem Rolladenkasten 1 ist in hier nicht interessierender, bekannter Weise die Rolladenachse 4 gelagert, von der in der Offen-Lage der Rolladen als Wickel 5 getragen wird. Der Rolladen besteht aus einzelnen, aneinanderhängenden Lamellen 6, die sich beim Abwickeln vom Wickel 5 zwischen den Führungsschienen 7 und 8 (siehe Fig. 2) abwärts bewegen.

In Fig. 2 ist der Rolladen in der Offen-Lage dargestellt, in der seine unterste Lamelle 9 gerade aus der Unterwand 3 des Rolladenkastens 1 herausragt. Sie ist in dieser Stellung durch den als Anschlag gegenüber der Unterwand 3 dienenden Winkel 10 arretiert. Gemäß Darstellung in Fig. 2 werden die Lamellen 6/9 des Rolladens nach unten hin zwecks Andeutung der Schließlage durch strichpunktierte Linien fortgesetzt.

Die Führungsschienen 7 und 8 sind an den Fensterrahmen 11 angeschlagen, der an seiner Unterseite durch das Fensterbrett 12 begrenzt ist. In Fig. 2 sind noch die Begrenzungen 13 und 14 der Außen- und Innenwand dargestellt.

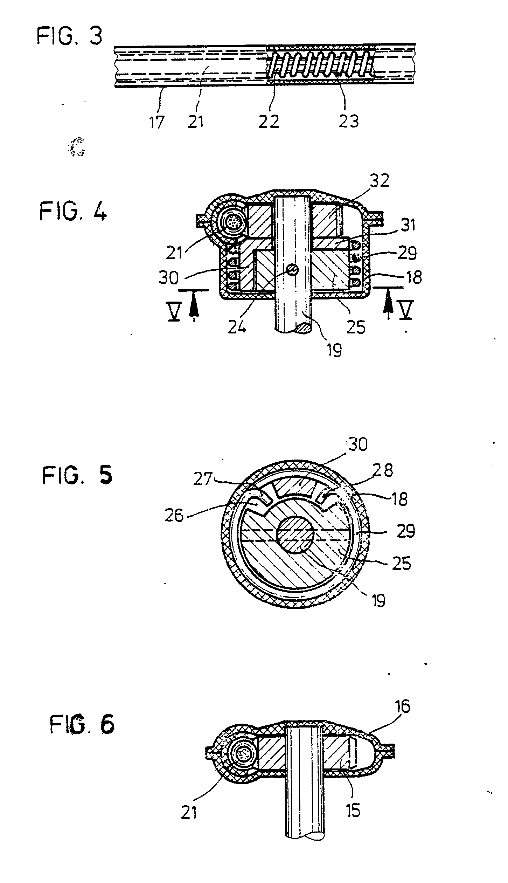

Auf der Rolladenachse 4 sitzt das Ritzel 15, das in dem in Fig. 1 strichpunktiert dargestellten, im Rolladenkasten 1 befestigten Gehäuse 16 gelagert ist. Im einzelnen sind Gehäuse 16 und Ritzel 15 in der Fig. 6 dargestellt. Das Ritzel 15 greift in einen beispielsweise in Fig. 3 dargestellten biegsamen Antriebsstab 21 ein. Das Rohr 17 geht in den Antriebs- und Bremstopf 18 über, der im einzelnen im Zusammenhang mit den Figuren 4 und 5 näher erläutert wird. Aus dem Antriebs- und Bremstopf 18 ragt die Drehachse 19 heraus, auf der die Kurbel 20 sitzt. Bei Antrieb der Kurbel 20 erfolgt über den Antriebs- und Bremstopf 18 in der weiter unten beschriebenen Weise eine Verschiebung des Antriebsstabs 21, die zu einer entsprechenden Verdrehung des in den Antriebsstab 21 eingreifenden Ritzels 15 führt, wodurch die Achse 4 des Rolladens entsprechend verdreht wird. Der Rolladen wird auf diese Weise entsprechend auf- oder abgewickelt. Der Antriebs- und Bremstopf 18 kann dabei an einer praktisch beliebigen Stelle im Innenraum hinter dem betreffenden Fenster angebracht werden. Insbesondere ist es möglich, den Antriebs- und Bremstopf in einem anderen Raum, z. B. in einem Kellerraum unterzubringen, da für die Verbindung zum Ritzel 15 lediglich das Rohr 17 mit dem biegsamen Antriebsstab 21 entsprechend zu verlegen ist.

Als biegsamer Antriebsstab kann vorzugsweise die in der Fig. 3 dargestellte bekannte Spirale 21 verwendet werden, die in dem Rohr 17 gleitend gelagert ist. Die Spirale besteht aus dem Drahtkern 22, auf den spiralförmig mit Abstand der einzelnen Windungen voneinander der Draht 23 aufgewickelt ist. Aufgrund dieser Ausbildung besitzt die Spirale 21 einerseits die erforderliche Flexibilität, ausserdem ist sie druck- und zugsteif ausgebildet, so daß sich ein auf sie ausgeübter Zug bzw. Druck zu einer über die gesamte Länge der Spirale 21 sich erstreckenden Verschiebung auswirkt. Aufgrund des Abstandes zwischen den Windungen des auf den Drahtkern 22 aufgewickelten Drahtes 23 ergibt sich längs der Spiral 21 eine Ausnehmungsreihe, die als Verzahnung ausnutzbar ist. Das Rohr 17 besteht aus biegsamem Material, z. B. Kunststoff, so daß das aus Rohr 17 und Spirale 21 bestehende Gebilde ohne weiteres über Bögen in Anpassung an alle möglichen inneren Raumformen zu verlegen ist.

In den Fig. 4 und 5 ist der Antriebs- und Bremstopf 18 im einzelnen dargestellt. In ihm ist die Drehachse 19 gelagert, auf der mittels des Stiftes 24 das Segmentstück 25 drehfest gelagert ist. Das Segmentstück 25 weist die segmentartige Aussparung 26 auf, in die sowohl die abgewinkelten Enden 27, 28 der Spiralfeder 29 als auch der Vorsprung 30 des Mitnehmers 31 eingreifen. Mit dem Mitnehmer 31 ist drehfest das Antriebszahnrad 32 verbunden, das auf der Drehachse 19 gleitend gelagert ist, so daß es sich gegenüber der Drehachse 19 leicht verdrehen läßt.

Die Wirkungsweise dieser Anordnung ist folgende : Bei Verdrehen der Drehachse 19 wird das Segmentstück 25 mitverdreht, das daraufhin gegen eines der Enden 27 bzw. 28 der Spiralfeder 29 anläuft und diese damit zusammenzieht. Die Spiralfeder, die im Ruhezustand satt an der Innenwand des Antriebs- und Bremstopfs 18 anliegt, wird hierdurch zusammengezogen und verschiebt sich soweit, bis das betreffende Ende 27 bzw. 28 gegen den Vorsprung 30 zur Anlage kommt, der daraufhin in Drehrichtung bewegt wird. Über den mit dem Vorsprung 30 einstückig verbundenen Mitnehmer 31 wird dann das Ritzel 32 mitgedreht, das aufgrund seines Eingriffs in die Spirale 21 diese gegenüber dem Antriebs- und Bremstopf 18 verschiebt. Wird nun in umgekehrter Antriebsrichtung die Spirale 21 verschoben, so nimmt diese das Ritzel 32 mit, das sich aufgrund seiner Lagerung auf der Drehachse 19 gegenüber dieser frei verdrehen kann. Aufgrund dieser Verdrehung wird der Mitnehmer 31 mitgenommen, so daß schließlich der Vorsprung 30 gegen eines der Enden 27 bzw. 28 der Spiralfeder 29 aufläuft, die daraufhin gespreizt wird.

Aufgrund dieser Spreizung verklemmt sich die Spiralfeder 29 gegenüber der Innenwandung des Antriebs- und Bremstopfes 18, wodurch die weitere Verdrehung des Vorsprungs 30 und damit die weitere Verschiebung der Spirale 21 verhindert wird. Es handelt sich dabei also um eine in beiden Längsverschiebungsrichtungen der Spirale 21 wirkende Feststellbremse, da der Vorsprung 30 sowohl gegen das Ende 27 als auch das Ende 28 der Spirale 29 auflaufen kann. Es sei noch darauf hingewiesen, daß es sich bei dem vorstehend erläuterten Antrieb- und Bremstopf um ein bekanntes Bauelement handelt.

Überträgt man nun die vorstehend erläuterte Funktion auf den Rolladen gemäß den Fig. 1 und 2, so ergibt sich, daß bei diesem über die Kurbel 20 ein Antrieb, also ein Aufziehen bzw. Herablassen des Rolladens möglich ist, nicht jedoch eine Verschiebung des Rolladens durch auf dessen Lamellen 6/9 bzw. den Wickel 5 oder die Drehachse 4 direkt wirkende Kräfte. Hierdurch ergibt sich automatisch ein Sicherungseffekt für den geschlossenen Rolladen, der aus dieser Lage jederzeit durch Verdrehen der Kurbel 20 hochgezogen werden kann, der jedoch aus der Schließlage nicht in die Offen-Lage durch Druck auf die Lamellen 6/9 überführt werden kann, da ein sich hierbei auf die Rolladenachse 4 ausgeübtes Drehmoment auf das Ritzel 15 und damit den biegsamen Antriebsstab bzw. Spirale 21 übertragen würde, deren Verschiebebewegung im Rohr 17 in diesem Falle durch die vorstehend anhand der Fig. 4 und 5 beschriebene Feststellbremse im Antriebs- und Bremstopf verhindert wird.

Handelt es sich um einen Antriebsfall der vorstehend beschriebenen Antriebsverbindung, z. B. im Zusammenhang mit einem Kippfenster, auf dessen Drehachse das Ritzel 15 sitzt, so wird durch die eräuterte Feststellbremse das Kippfenster in jeder Kipplage, insbesondere also in der Offen-Lage und auch Schließ-Lage gegenüber auf das Kippfenster selbst wirkenden Kräften automatisch arretiert, weil eine Verdrehung der Drehachse des Kippfensters, die sich in gleichem Umfang auf den Antriebsstab bzw. die Spirale 21 auswirken würde, abgesehen von dem durch die Ausnehmung 26 gemäß Fig. 5 gegebenen Spiel, so daß vor allem ein unerlaubtes Öffnen eines Kippfensters von außen her durch die beschriebene Feststellbremse verhindert wird.

Im Falle des in den Fig. 1 und 2 dargestellten Rolladens ist nun zusätzlich zu beachten, daß der Rolladenkasten 1 in seinem Innenraum in der Schließlage des Rolladens einen solchen Freiraum beläßt, daß ein Hochschieben der Lamellen 6/9 durch von außen wirkende Kräfte so weit möglich ist, bis sich in diesem Freiraum die in diesen hochgeschobenen Lamellen des Rolladens stauchen. Dies ermöglicht normalerweise ein unerlaubtes Hochschieben der Lamellen 6/9 aus der Schließlage um eine solche Höhe, daß hierdurch u. U. ein Einschlagen eines dahinterliegenden Fensters und damit ein Einbruch möglich wird.

Um nun eine derartige Verschiebung des Rolladens aus der Schließlage, in der also die Lamelle 9 auf dem Fensterbrett 12 aufliegt, zu verhindern, ist gemäß Fig. 1 ein in dem Rohr 33 geführter Zusatzstab 34 vorgesehen, wobei der Zusatzstab 34 die Verlängerung des im Rohr 17 geführten Antriebsstabs 21 (siehe Fig. 2) bildet. Das Rohr 33 ist aus dem Gehäuse 16 im Prinzip in gleicher Weise herausgeführt, wie das Rohr 17 in das Rohr 16 hineingeführt ist. Dies bedeutet, daß eine Verschiebung des Antriebsstabs 21 in gleicher Weise zu einer Verschiebung des Zusatzstabes 34 führt.

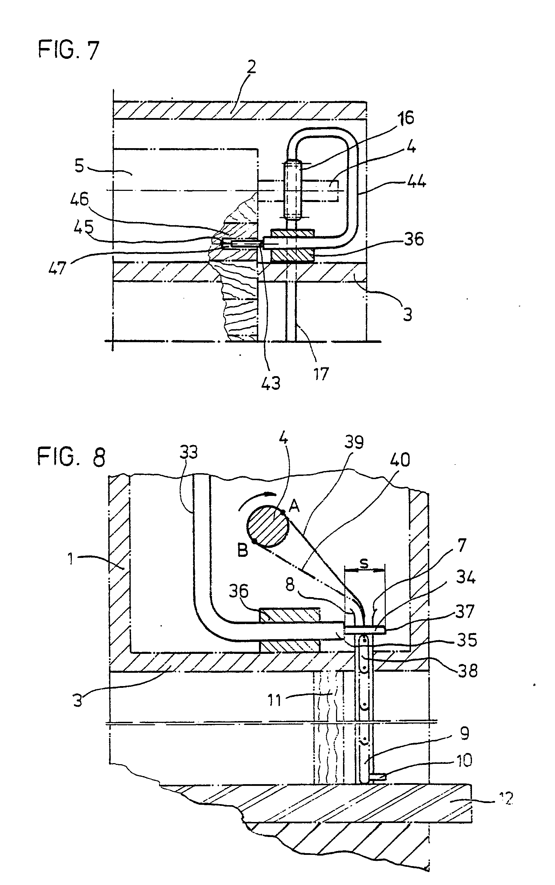

Der Zusatzstab 34 mit dem Rohr 33 ist, wie sich aus Fig. 1 und 8 ergibt, um den Wickel 5 herum so geführt, daß das Ende 35 des Rohres 33 durch den Block 36 dicht gegenüber der Mitte der Lamellen 9 angeordnet ist, wobei dieses Ende 35 senkrecht auf die Lamellen 9 zuweist. Dabei ist nun die Länge des Zusatzstabes 34 so dimensioniert, daß bei in Fig. 8 dargestellter Schließlage des Rolladens das Ende 37 des Zusatzstabes 34 in die Bahn des Rolladens eindringt, und zwar gemäß Fig. 8 in einer Weise, daß sich das Ende 37 des Zusatzstabes 34 gerade hinter die obere Kante der obersten Lamelle 38 des Rolladens legt. In dieser Lage wird durch das Ende 37 des Zusatzstabes 34 verhindert, daß durch äußere Kräfte ein Hochschieben des Rolladens erfolgen kann. Die einzelnen Lamellen 9/38 des Rolladens erfolgen kann. Die einzelnen Lamellen 9/38 des Rolladens sind durch die beiden Führungsschienen 7 und 8 seitlich so geführt, daß sie nicht ausweichen können, so daß eine auf diese Lamellen wirkende Kraft in Richtung auf den Rolladenkasten 1 von dem Ende 37 des Zusatzstabes 34 sicher aufgefangen wird.

Damit nun das Ende 37 des Zusatzstabes 34 eine diese Rückbewegung des Rolladens verhindernde Vorschubbewegung in der Länge s ausführen kann, wird ein im Auf- bzw. Abwickelmechanismus des Rolladens liegender Totgang ausgenutzt, der sich dadurch ergibt, daß die oberste Lamelle 38 (siehe Fig. 8) über den flexiblen Gurt 39 an der Rolladenachse 4 aufgehängt ist. Hat der in Fig. 8 dargestellte Rolladen die in dieser Figur gezeigte Schließlage erreicht und nimmt dabei die Befestigungsstelle des Gurts 39 an der Rolladenachse 4 die durch A bezeichnete Lage ein, so ergibt sich für das Ende 37 des Zusatzstabes 34 eine Lage, in der dieses Ende 37 etwa mit dem Ende 35 des Rohres 33 zusammenfällt. Es kann dann die Rolladenachse 4 noch um etwa 180° gedreht werden, in der die Befestigungsstelle des Gurts 39 zu dem mit B bezeichneten Punkt wandert, wodurch sich eine weitere Vorschiebung des Zusatzstabes 34 ergibt, nämlich um die Länge s, womit das Ende 37 des Zusatzstabes 34 die in der Fig. 7 dargestellte Lage einnimmt. Während dieser Drehung der Rolladenachse 4 wird also der Zusatzstab 34 um die Länge s weiterbewegt, ohne daß damit jedoch auf den Vorschub der Lamelle 38 und der an dieser hängenden weiteren Lamellen eine Wirkung ausgeübt wird.

Damit nun aus einer Drehlage der Rolladenachse 4, in der die Befestigungsstelle des Gurtes 39 die mit B bezeichnete Lage einnimmt (strichpunktierte Linie 40 des Gurtes 39), ein Wiederaufwickeln des Rolladens auf der Rolladenachse 4 verhindert wird, ist auf dem dem Ende 37 entgegengesetzten Ende des Antriebsstabes 21 der Stellring 41 (Fig. 2) angebracht, dessen Lage so gewählt ist, daß er sich bei Erreichen der in Fig. 8 dargestellten Lage des Zusatzstabes 34 gegen das Ende 42 des Rohres 17 setzt. Der Stellring 41 verhindert in dieser erreichten (in Fig. 2 nicht dargestellten) Lage, daß die Kurbel 20 weitergedreht wird.

In Fig. 7 ist eine andere Ausführungsform der Sicherung des Rolladens gegen unerwünschtes Hochschieben aus der Schließlage dargestellt. Auch hier ist ein Zusatzstab 43 vorgesehen, der auf einer Verlängerung des in der Fig. 8 nicht dargestellten, im Rohr 17 geführten Antriebsstabes besteht. Der Zusatzstab 43 wird in dem derart im Rolladenkasten gelegten Rohr 44 geführt, daß das Ende 45 des Zusatzstabes 43 in die Stirnseite derjenigen Lamelle 46 eindringt, die dem Zusatzstab 43 gegenübersteht, wenn sich der Rolladen in der Schließlage befindet. Um ein Eindringen des Endes 45 des Zusatzstabes 43 in die Lamelle 46 zu ermöglichen, ist diese mit der Öffnung 47 versehen, für die gegebenenfalls ein entsprechender sowieso vorhandener Hohlraum in der Lamelle 46 ausgenutzt werden kann. Bezüglich der weiter in der Fig. 7 dargestellten Bauteile und deren Funktion sei auf die Erläuterung zu den Fig. 1 und 8 verwiesen.

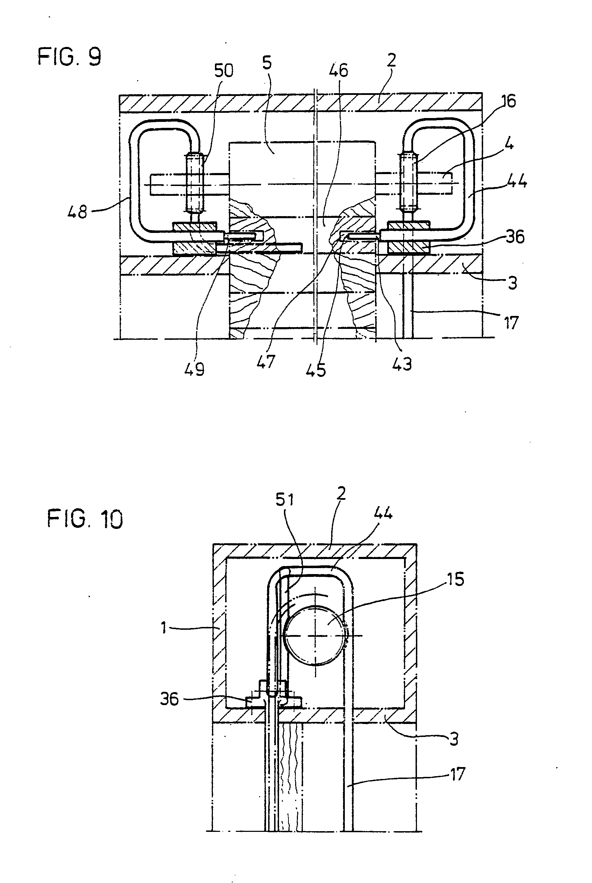

Bei der Ausführungsform gemäß Fig. 7 erfolgt eine Sicherung des Rolladens nur von dessen einer Seite her, so daß u. U., falls der Rolladen ein ausreichendes Spiel zwischen den Führungsschienen 7 und 8 besitzt, eine Schrägverschiebung durch Druck auf die gegenüberliegende Seite der Rolladenlamellen denkbar ist, was zu einem entsprechenden Schrägspalt an der untersten Rolladenlamelle führen könnte. Um auch dies zu verhindern, kann die Anordnung gemäß Fig. 9 vorgesehen werden, bei der ergänzend zu der Anordnung gemäß Fig. 7 spiegelbildlich auf der gegenüberliegenden Seite des Wickels 5 nochmals ein Rohr 48 mit einem Zusatzstab 49 vorgesehen ist. Dieser Zusatzstab 49 wird mittels eines zusätzlichen auf der Rolladenachse 4 angebrachten Ritzels angetrieben, das in dem Gehäuse 50 gelagert ist. Es handelt sich dabei also um ein Gehäuse, das dem Gehäuse 16 (siehe Fig. 6) entspricht. Bei Verdrehung der Rolladenachse 4 im Sinne der Darlegung zu Fig. 8 ergibt sich somit in der Schließlage des Rolladens ein Heraustreten der Zusatzstäbe 43 und 49 aus den betreffenden Rohren 44 und 48, womit die betreffende Rolladenlamelle 46 an ihren beiden Stirnseiten gesichert wird.

Es sei noch darauf hingewiesen, daß bei der Anordnung gemäß Fig. 9 auch nur eine einzige über das Gehäuse 50 betätigte Sicherung vorgesehen sein kann, so daß der Zusatzstab 49 allein aus einem separaten Stab bestehen würde.

In Fig. 10 ist eine Variante zur Ausführungsform gemäß Fig. 9 dargestellt, bei der über nur ein Ritzel 15 zwei Zusatzstäbe angetrieben werden, nämlich der in Fig. 9 dargestellte Zusatzstab 43 und ein weiterer im Rohr 51 geführter Zusatzstab, der, wie der Zusatzstab 49, gemäß Fig. 9 endet, jedoch auch von dem Ritzel 15 angetrieben wird, wozu das Ritzel 15 an einander gegenüberliegenden Seiten eine Eingriffsstelle in einem Zusatzstab aufweist. Das das Ritzel 15 enthaltende Gehäuse weist also zwei Eingänge und zwei Ausgänge für die betreffenden Rohre an gegenüberliegenden Seiten auf. Abgesehen davon ist die Wirkungsweise der in Fig. 10 dargestellten Ausführungsform mit zwei Zusatzstäben und einem Ritzel 15 die gleiche wie die der Anordnung gemäß Fig. 9.

**Patentansprüche**

1. Antrieb eines Rolladens (5) mit einer Drehachse (4) und einem auf dieser festsitzenden Ritzel (15) mit einem Gehäuse (16), in das ein Rohr (17) mit einem in diesem geleiteten biegsamen Antriebsstab (21) geführt ist, der mit einer Ausnehmungsreihe (21, 23) versehen ist und mittels des Rohres (17) mit einem Antriebszahnrad (32) verbunden ist, das mit einer eine selbständige Verdrehung des Antriebszahnrades (32) verhindernden Feststellbremse (18, 29) versehen ist, wobei die Zähne des Ritzels (15) und des Antriebszahnrades (32) in die Ausnehmungsreihe (21, 23) des Antriebsstabs (21) eingreifen und ein über das Ritzel (15) angetriebener, in einem Rohr (33, 44, 48) geführter Zusatzstab (34, 43, 49) so weit bis in den Bereich der Führung des Rolladens (5) gelegt ist, daß der Zusatzstab (34, 43, 49) mit seinem Ende bei geschlossenem Rolladen (5) in dessen Bahn eindringt.

2. Antrieb nach Anspruch 1, dadurch gekennzeichnet, daß die Achse (4) des Rolladens (5) in dessen Schließlage einen Totgang (A, B) gegenüber dem Rolladen (5) aufweist.

3. Antrieb nach Anspruch 2, dadurch gekennzeichnet, daß der Zusatzstab (34, 43) als Verlängerung des Antriebsstabs (21) ausgebildet ist, dessen Rohr (33, 44) über das Gehäuse (16) hinaus verlängert ist.

4. Antrieb nach Anspruch 2, dadurch gekennzeichnet, daß der Zusatzstab (49) als gesonderter Stab ausgebildet ist.

5. Antrieb nach Anspruch 4, dadurch gekennzeichnet, daß der Zusatzstab auf der dem Antriebsstab (21) abgewandten Seite des Ritzels (15) in dieses eingreift.

6. Antrieb nach Anspruch 4, dadurch gekennzeichnet, daß der Zusatzstab (49) über ein weiteres Ritzel angetrieben ist.

7. Antrieb nach einem der Ansprüche 2 bis 6, dadurch gekennzeichnet, daß das Ende (45) des Zusatzstabes (43) in den Rolladen eindringt.

8. Antrieb nach einem der Ansprüche 2 bis 6, dadurch gekennzeichnet, daß das Ende (37) des Zusatzstabes (34) über den oberen Abschluß (38) des Rolladens greift.

**Claims**

1. An operating mechanism for a roller blind (5) having a rotary spindle (4) and, fast thereon, a pinion (15) in a housing (16) into which is led a tube (17) in which is guided a flexible actuating rod (21) provided with a series of recesses (21, 23) and connected, by means of the tube (17), to a toothed driving wheel (32) which is provided with a locking brake (18, 29) preventing the toothed driving wheel (32) from turning independently, wherein the teeth of the pinion (15) and of the drive wheel (32) engage in the series of recesses (21, 23) in the actuating rod (21) and an auxiliary rod (34, 43, 49), driven through the pinion (15) and guided in a tube (33, 44, 48), extends so far into the area of control of the roller blind (5) that, when the roller blind (5) is closed, the end of the auxiliary rod (34, 43, 49) penetrates into the path of the blind.

2. An operating mechanism as claimed in Claim 1, characterised in that the spindle (4) of the roller blind (5) has, in its closed position, a lost motion (A, B) in relation to the roller blind (5).

3. An operating mechanism as claimed in Claim 2, characterised in that the auxiliary rod (34, 43) is formed by an extension of the actuating rod (21), the tube (33, 44) of which is extended beyond the housing (16).

4. An operating mechanism as claimed in Claim 2, characterised in that the auxiliary rod (49) is made as a separate rod.

5. An operating mechanism as claimed in Claim 4, characterised in that the auxiliary rod engages in the pinion (15) at the side thereof remote from the actuating rod (21).

6. An operating mechanism as claimed in Claim 4, characterised in that the auxiliary rod (49) is driven through a further pinion.

7. An operating mechanism as claimed in any one of the Claims 2 to 6, characterised in that the end (45) of the auxiliary rod (43) penetrates into the roller blind.

8. An operating mechanism as claimed in any one of Claims 2 to 6, characterised in that the end (37) of the auxiliary rod (34) engages over the upper edge (38) of the roller blind.

## Revendications

1. Mécanisme d'entraînement d'un volet roulant (5) comportant un axe de rotation (4) et un pignon (15) fixé sur celui-ci ainsi qu'un boîtier (16) dans lequel est guidé un tube (17) dans lequel passe une tige de commande (21) flexible qui est pourvue d'une série d'évidements (21, 23) et assemblée, au moyen du tube (17) à une roue dentée d'entraînement (32) qui comporte un frein de blocage (18, 29) empêchant une rotation indépendante de la roue dentée d'entraînement (32), les dents du pignon (15) et la roue dentée d'entraînement (32) engrenant dans la série d'évidements (21, 23) de la tige de commande (21) et une tige supplémentaire (33, 43, 49) entraînée par le pignon (15) guidée dans un tube (33, 44, 48) étant posée suffisamment loin dans la zone du guidage du volet roulant (5) pour que l'extrémité de la tige supplémentaire (34, 43, 49) pénètre dans la voie du volet (5) lorsque celui-ci est fermé.

2. Mécanisme d'entraînement selon la revendication 1, caractérisé en ce que l'axe (4) du volet roulant (5) présente, en position de fermeture de celui-ci, une course à vide (A, B) par rapport au volet roulant (5).

3. Mécanisme d'entraînement selon la revendication 2, caractérisé en ce que la tige supplémentaire (34, 43) est un prolongement de la tige de commande (21) dont le tube (33, 44) est prolongé au-delà du boîtier (16).

4. Mécanisme d'entraînement selon la revendication 2, caractérisé en ce que la tige supplémentaire (49) est une tige indépendante.

5. Mécanisme d'entraînement selon la revendication 4, caractérisé en ce que la tige supplémentaire sur la face du pignon (15) tournée vers la tige d'entraînement (21) engrène dans celui-ci.

6. Mécanisme d'entraînement selon la revendication 4, caractérisé en ce que la tige supplémentaire (49) est entraînée par un autre pignon.

7. Mécanisme d'entraînement selon l'une des revendications 2 à 6, caractérisé en ce que l'extrémité (45) de la tige supplémentaire (43) pénètre dans le volet roulant.

8. Mécanisme d'entraînement selon l'une des revendications 2 à 6, caractérisé en ce que l'extrémité (37) de la tige supplémentaire (34) dépasse la fermeture (38) supérieure du volet roulant.

# FIG. 1

# FIG. 2

FIG. 3

17    21        22        23

FIG. 4

32
31
21
29
30
18
24    19    25

FIG. 5

30
27    28
26    18
29
25
19

FIG. 6

16
21    15

FIG. 7

FIG. 8

FIG. 9

FIG. 10